# EUROPEAN PATENT APPLICATION

(11) **EP 1 958 991 A2**
(43) Date of publication of application: **20.08.2008**
(21) Application number: 08250498.6
(22) Date of filing: 11.02.2008
(51) Int. Cl.: C09D 5/16, C09D 133/02, C08K 5/39

(54) **Water-based anti-fouling paint composition**

(30) Priority: 13.02.2007 JP 2007032535
(71) Applicant: Rohm and Haas Company, Philadelphia, PA 19106-2399 (US)
(72) Inventor: Ogata, Tomoaki, Soka-City, Saitama 340-0002 (JP); Takahashi, Kazunobu, Osaka-City Osaka 536-0017 (JP)
(74) Representative: Buckley, Guy Julian

(57) **Abstract**

The purpose of this invention is to provide a water-based anti-fouling paint composition which has excellent anti-fouling effects in seawater and which has minimal effect on the environment and on the operators because organic solvents are essentially not included. The purpose is accomplished by providing a water-based anti-fouling paint composition that contains a metal cross-linked acrylic water-based emulsion composition containing a divalent metal compound and dithiocarbamate compound, and which essentially does not require volatile organic solvents.

## Description

### TECHNOLOGY FIELD

The present invention relates to a water-based anti-fouling paint composition that uses a metal cross-linked acrylic water-based emulsion composition. The present invention further relates to a water-based anti-fouling paint composition that can form a coating for preventing adhesion of aquatic life and algae to structures in oceans such as fishing nets and ships.

### BACKGROUND TECHNOLOGY

Anti-fouling paint compositions are used commercially to prevent the growth of organisms on oceanic structures such as ships and fishing nets. Fishing nets, and particularly fixed net and fish farming nets, are placed in seawater for long periods of time, and therefore various types of plants and animals will become attached. For instance, the net mesh can become blocked if harmful organisms such as corn barnacles and hydrozoans become attached, the water quality in the region will deteriorate, and a shortage of oxygen may result. Furthermore, the weight of the fishing nets will increase because of these attached organisms, and therefore the burden on the operators who handle these nets is increased.

Conventionally, organic tin compounds such as tributyl tin oxide have been used as the main marine anti-fouling agent in anti-fouling paint compositions. However, in recent years, concern about the high toxicity of tin and the effect on the marine environment has been increasing, and the use of organic tin compounds in anti-fouling paint is restricted. Therefore, various anti-fouling paint compositions which contain marine anti-fouling agents as a substitute for organic tin compounds have been proposed.

US Patent No. 5,071,479 proposes another organic compound as a marine anti-fouling agent, and discloses the use of 3-iodopropagyl N-butylcarbamate (Patent Document 1). However, this composition did not have performance equivalent to anti-fouling paint containing organic tin compounds, and commercially could not show excellent results.

Furthermore, dithiocarbamate compounds have long been known to be effective as another type of marine anti-fouling agent and are used in anti-fouling paint. In order to form an anti-fouling film containing dithiocarbamate compound, various paint compositions containing resin components have been proposed. Japanese Unexamined Patent Application S62-57464 proposes an anti-fouling paint composition using a resin containing a divalent metal in order for the resin component itself to have anti-fouling properties (Patent Document 2).

However, conventionally proposed anti-fouling paint compositions use volatile organic solvents in order to produce the resin that contains the metal, so the paint composition contains organic solvents. Therefore there are handling problems related to the odor and volatility of the organic solvents. Furthermore, resins which are prepared by a solution polymerization method have an average molecular weight that is relatively low, between 2000 and several tens of thousands, and the film forming resin does not provide the desired adhesion to the base material. Therefore, anti-fouling paints for water which use these resins require a separate additive, or the like, to improve adhesion.

To address the aforementioned problems, a water-based anti-fouling paint has been proposed which uses a resin produced by emulsion polymerization which can provide a high molecular weight resin. However, adhesion of the anti-fouling paint to a base material can be improved by using a high molecular weight emulsion resin, but generally the rate of the resin eluting into the water will be relatively fast, and therefore the requirements of paint for use in water cannot be met. Therefore, various additives and high viscosity resins such as polyisobutylene must be used as essential components when manufacturing anti-fouling paint. Japanese Unexamined Patent Application H9-52803 discloses a water-based anti-fouling agent that contains a water-based emulsion using N-alkylpolyamine compounds as an active component (Patent Document 3). Furthermore, Japanese Unexamined Patent Application H11-193203 discloses a fishing net anti-fouling agent containing a resin blend of acrylic resin and isobutylene together with a cellulose derivative as a solvent adjuster which uses a dithiocarbamate compound as an active component (Patent Document 4). Japanese Unexamined Patent Application 2005-213336 discloses a water-based anti-fouling paint composition that contains a polybutene emulsion with a specific arithmetic mean molecular weight (Patent Document 5).

However, polybutene and polyisobutylene have problems in that these substances have poor compatibility with acrylic resin, readily separate in a paint composition, and a uniform coating is not easily formed even though mixing is performed during application.
[Patent Document 1] US Patent No. 5,071,479
[Patent Document 2] Japanese Unexamined Patent Application S62-57464
[Patent Document 3] Japanese Unexamined Patent Application H9-52803
[Patent Document 4] Japanese Unexamined Patent Application H11-193203
[Patent Document 5] Japanese Unexamined Patent Application 2005-213336

### DISCLOSURE OF THE INVENTION

### PROBLEM TO BE RESOLVED BY THE INVENTION

An objective of the present invention is to provide a water-based anti-fouling paint composition as a substitute for a nonwater-based anti-fouling composition which uses a conventional organic solvent. In other words, an objective is to provide a water-based anti-fouling paint composition which has minimal negative effects on people and the environment due to volatile organic solvents, that is safe to handle, has excellent adhesion, and can form a uniform paint film.

### MEANS FOR RESOLVING PROBLEM

In order to resolve the aforementioned problems, the present invention uses a dithiocarbamate compound as a marine anti-fouling agent and uses a specific acrylic water-based emulsion composition as a film forming resin component. In other words, the present invention is a water-based anti-fouling paint composition comprising a dithiocarbamate compound and a metal cross-linked acrylic water-based emulsion composition, and water wherein:
said water-based anti-fouling paint composition does not contain polybutene; and
said metal cross-linked acrylic water-based emulsion composition can be obtained by reacting
   (i) a copolymer in an acrylic water-based emulsion composition produced by the emulsion polymerization of (a) an ethylenic unsaturated monomer or alkali metal salt thereof containing an acidic functional group accounting for between 3 and 90% by weight based on the total weight of monomer, and (b) an ethylenic unsaturated monomer not containing an acidic functional group accounting for between 10 and 97% by weight based on the total weight of monomer; and
   (ii) a divalent metal compound;
said reaction performed at a temperature more than 10°C above the glass transition temperature of said copolymer and below the decomposition temperature of said copolymer.

### EFFECT OF THE INVENTION

By using the water-based anti-fouling paint composition of the present invention, a marine anti-fouling agent can be uniformly dispersed in a paint composition and a uniform anti-fouling paint film can be formed that has minimal burden on the environment and people. Furthermore, it was discovered that the anti-fouling paint composition of the present invention provides an anti-fouling paint that has the synergistic effects of an anti-fouling effect due to elution of the resin that forms the film, and the ability to uniformly control elution of the marine anti-fouling agent by a uniform paint film, and thus the present invention was achieved.

### BEST FORM FOR IMPLEMENTING THE INVENTION

The water-based anti-fouling paint composition of the present invention contains water and a metal cross-linked acrylic water-based emulsion composition comprising dithiocarbamate compound and a divalent metal.

The metal cross-linked acrylic water-based emulsion composition used with the present invention is a water-based emulsion composition that contains an acrylic copolymer and a divalent metal as essential components. This metal cross-linked acrylic water-based emulsion composition can form a water-based anti-fouling paint composition together with dithiocarbamate compound which is an essential marine anti-fouling agent of the present invention, and furthermore, the paint film which is formed will gradually dissolve into the seawater when drying after application, and this will provide a self-polishing effect on the anti-fouling paint film.

The acrylic copolymer that contains the metal cross-linked acrylic water-based emulsion composition of the present invention is dissolved or dispersed in water, and in addition the polymer has acidic functional groups on the side chains. The acidic functional groups in the copolymer can regulate the level of acidity (expressed as the acid value of the copolymer) by commonly known methods. For instance, the acrylic copolymer of the present invention can be obtained by formulating an acrylic copolymer using monomer which does not have an acidic functional group and monomer which has an acidic functional group, salt thereof, or an acidic anhydride functional group. Preferably, monomer which has an acidic functional group is in a range between 1% by weight and 90% by weight of the total monomer, more preferably in range between 3% by weight and 50% by weight. The acidic value of the copolymer is in a range between 1 and 270, preferably between 20 and 160. Monomer which has an acidic functional group may be (a) an ethylenic unsaturated monomer containing one or more acidic functional groups selected from a carboxyl group, a sulphonic group, and a phosphonic group. Furthermore, monomer which does not have an acidic functional group used for adjusting the acrylic copolymer is selected by the desired characteristics of the copolymer. These monomers which do not have an acidic functional group may be (b) an ethylenic unsaturated monomer such as an acrylate.

The following terminology used herein have the definitions shown below unless otherwise specifically noted. The term "(meth)acrylic" refers to either acrylic or methacrylic, and the term "(meth)acrylate" refers to either acrylate or (meth)acrylate ester. All percentages are weight percentages (%) based on the total weight of the comprising composition unless otherwise noted. Furthermore, g = grams, L = liters, mL = milliliters, mm = millimeters, cm = centimeters, rpm = rotations per minute, and temperatures are in Celsius (°C). Unless otherwise noted, value ranges include the values at both ends. Furthermore, unless otherwise specifically noted, the term "acidic functional group" includes acidic functional groups, salts thereof, acidic anhydride groups, and combinations of these.

Examples of (a) ethylenic unsaturated monomers containing an acidic functional group include unsaturated monocarboxylic acids such as (meth)acrylic acid, crotonic acid, vinyl acetate, allyl acetate, ethylidene acetate, propylidene acetate, and acriloxypropionic acid, and the like; unsaturated dicarboxylic acids such as maleic acid, maleic anhydride, itaconic acid, citriconic acid, mesaconic acid, methylene malonic acid, and fumaric acid as well as acidic anhydride and salts thereof; specifically 2-acrylamide-2-methyl-1-propane-sulfonic acid, 2-methacrylamide-2-methyl-1-propane sulfonic acid, 3-methacrylamide-2-hydroxypropane sulfonic acid, allyl sulfonic acid, methallyl sulfonic acid, styrene sulfonic acid, vinyl sulfonic acid, 2-sulfopropylacrylate, sulfomethylacrylamide, sulfomethylmethacrylamide, and phosphoethylmethacrylate. Examples of salts include sodium salt, potassium salt, and ammonium salt, and the like. These monomers may be used independently, or two or more types may be blended and used. The ethylenic unsaturated monomer containing an acidic functional group includes partial esters of unsaturated aliphatic dicarboxylic acids. The (a) ethylenic unsaturated monomer containing an acidic functional group is preferably acrylic acid, methacrylic acid, or salt thereof.

The (b) ethylenic unsaturated monomer may be a monomer that has ethylenic unsaturated bonds such as alkyl(meth)acrylates, (meth)acrylates containing a hydroxy group or an amino group, aromatic vinyl compounds, and vinyl esters, and the like.

The alkyl(meth)acrylate includes methyl acrylate, ethyl acrylate, propyl acrylate, isopropyl acrylate, butyl acrylate, isobutyl acrylate, sec- butyl acrylate, amyl acrylate, isoamyl acrylate, hexyl acrylate, 2-ethyl-hexyl acrylate, octyl acrylate, 3, 5, 5-trimethylhexyl acrylate, decyl acrylate, dodecyl acrylate, cetyl acrylate, octadecyl acrylate, octadecenyl acrylate, methyl methacrylate, ethyl methacrylate, propyl methacrylate, isopropyl methacrylate, butyl methacrylate, isobutyl methacrylate, sec-butyl methacrylate, n-amyl methacrylate, sec-amyl methacrylate, hexyl methacrylate, 2-ethylhexyl methacrylate, 2-ethylbutyl methacrylate, octyl methacrylate, 3,5,5-trimethylhexyl methacrylate, decyl methacrylate, dodecyl methacrylate, octadecyl methacrylate, and the like.

Examples of a (meth)acrylate containing a hydroxy group include 2-hydroxyethyl acrylate, 3-hydroxypropyl acrylate, 4-hydroxybutyl acrylate, polyethylene glycol monoacrylate, polypropylene glycol monoacrylate, 2-liydroxyethyl methacrylate, 3-hydroxypropyl methacrylate, 4-hydroxybutyl methacrylate, polyethylene glycol monomethacrylate, poly propylene glycol monomethacrylate, and the like. Examples of a (meth)acrylate containing an amino group include dimethylaminopropyl methacrylamide, dimethylaminopropyl acrylamide, dimethylaminoethyl acrylate, dimethylaminoethyl methacrylate, and the like.

Examples of an aromatic vinyl monomer include styrene, methylstyrene, chlorostyrene, ethylstyrene, hydroxystyrene, dimethylstyrene, and the like.

Furthermore, monomers which have an ethylenic unsaturated bond such as acrylonitrile, butadiene, chloroprene, isobutene, isoprene, and diacetone acrylamide are also included in (b) ethylenic unsaturated monomer.

The (b) ethylenic unsaturated monomer can be used individually or two or more types may be blended and used together. Preferably alkyl (meth)acrylates, or aromatic vinyl compounds are used. Particularly preferable are methyl acrylate, methyl methacrylate, ethyl acrylate, ethyl methacrylate, butyl acrylate, isobutyl acrylate, sec-butyl acrylate, butyl methacrylate, isobutyl methacrylate, sec-butyl methacrylate, and styrene, as well as blends of two or more types.

The acrylic copolymer of the present invention can be produced by an emulsification polymer method commonly known by one skilled in the art. The emulsification polymerization method was investigated in detail by D.C. Blackley (Wiley, 1975). The standard emulsification polymerization method is shown in US Patent No. 2,754,280 and No. 2,795,564.

As described above, common emulsification polymerization technology can be used to produce an acrylic copolymer suitable for the present invention. For instance, the acrylic water-based emulsion composition containing acrylic copolymer is prepared by polymerizing two or more types of monomer in a water-based solvent in the presence of an emulsifying agent and a polymer initiator. For instance, the monomer is emulsified using between approximately 0.5% and 10% of an anionic, cationic, or nonionic dispersing agent based on the total quantity of monomer. A free radical type polymer initiator such as ammonium persulfate or potassium persulfate is used independently or used in conjunction with a promoting agent such as sodium thiosulfate or potassium metabisulfite. The initiator and the promoter are generally referred to as catalysts, and each are used at a ratio of between 0.5% and 2% based on the total weight of monomer. The polymerization temperature is typically between room temperature and 90°C.

Examples of the emulsifying agents suitable for emulsification polymerization include alkali metal or ammonium salts of alkyl, aryl, alkaryl or aralkyl sulfonic acid, sulfuric acid, or polyether sulfuric acid; similar phosphate or phosphonic salts; alkoxylated derivatives, esters, alcohols, amines, amides, or alkylphenols, or the like, of fatty acids.

Chain transfer agents such as mercaptans, poly-mercaptans, and polyhalogenated compounds are preferably used in order to adjust the molecular weight of the copolymer.

Furthermore, if necessary, reducing agents, pH adjusting agents, and chelating agents, or the like, may be added when performing the emulsification polymerization, and these techniques are well known by those skilled in the art.

The acrylic copolymer of the present invention preferably has a glass transition temperature in a range between 0°C and 90°C. Herein, unless otherwise noted, the term "glass transition temperature" and "Tg" refer to the temperature measured according to the Fox method (US Physics Association Bulletin, Vol. 1 (3), page 123 (1956)), or in other words, refers to the temperature at or above the point that the polymer on glass will undergo segmental motion of the polymeric chain.

The metal cross-linked acrylic water-based emulsion composition of the present invention can be prepared by increasing the temperature of an acrylic water-based emulsion composition prepared as described above to a temperature at least 10°C higher than the Tg of the comprising acrylic copolymer (or preferably more than 20°C higher than said Tg), and while maintaining the temperature below the decomposition temperature of the copolymer, adding an appropriate quantity of divalent metal compound to the acrylic water-based emulsion composition, and then maintaining this temperature while maintaining the reaction between the acrylic copolymer and the divalent metal compound until the reaction is complete. Completion of the reaction can be confirmed by the exhaustion of the precipitate that occurs when the divalent metal compound is added, by an increase in the pH, or by a decrease in the opacity of the reaction blend. Furthermore, in addition to the aforementioned confirmation, whether or not the reaction has occurred can be confirmed if the film forming temperature (minimum film forming temperature) of the metal cross-linked acrylic water-based emulsion composition obtained is higher than the film forming temperature (minimum film forming temperature) of the acrylic copolymer prior to the reaction, and an increase in the minimum film forming temperature (for instance, 5°C or more, 10°C or more, or 15°C or more) shows that the reaction has occurred. Furthermore, after adding the divalent metal to the acrylic water-based emulsion composition, the reaction system can be heated to a temperature more than 10°C higher than the Tg of the acrylic copolymer but below the decomposition temperature of the copolymer. The reaction can be performed using a batch process, continuous polymerization process, or a semicontinuous polymerization process.

A divalent metal compound that is suitable for use with the present invention is a compound which includes divalent metal ions that have the ability to cross-link acrylic copolymers. Of these divalent metals, the metals which are useful for the present invention are divalent transition metals or alkali earth metals, and specific examples include zinc, tin, cadmium, nickel, zirconium, strontium, cobalt, magnesium, calcium, copper, lead, tin, tungsten, aluminum, and the like. From the viewpoint of low toxicity and cost, zinc, copper, manganese, aluminum, tungsten, magnesium, calcium, and zirconium are preferable.

These divalent metal ions are typically oxides, hydroxides, carbonates, or bicarbonates of the corresponding metal, and for instance, CaC0₃, ZnO, MgO, CuO, Mg(OH)₂, or Ca(OH)₂ fine powder or water-based slurry may be added to the acrylic water-based emulsion composition.

The maximum amount of divalent metal compound to add is determined by the amount (equivalents) of acidic functional groups (including salt and anhydride) in the acrylic copolymer and the equivalents of the divalent metal used. The divalent metal ion stoichiometrically reacts at a ratio of two equivalents of acidic functional groups to one mole of metal ion. Monovalent metal ion cannot properly cross-link the copolymer with the present invention. The amount of divalent metal compound added is preferably between approximately 15% and 100% per equivalent of acidic functional group of the acrylic copolymer. Using fewer equivalents of metal than the total number of stoichiometrical equivalents of the acidic functional group is more preferable, and is preferably in a range between approximately 35% and 80% for the number of the equivalents of the acidic functional group of the acrylic copolymer. The presence of unreacted metal compound will lead to a loss of stability of the metal cross-linked acrylic water-based emulsion composition, and metal compound remaining in the paint film that is formed is not preferable.

Though theoretically not restricted, it is thought that two or more acrylic copolymers form a chemical cross-linked condition across the metal by a reaction between the aforementioned divalent metal ion and two or more specific acrylic copolymer acidic functional groups. The metal cross-linked acrylic water-based emulsion composition which has a cross-linked condition is thought to differ from an emulsion composition which has been cross-linked by a normal cross-linking agent such as N-methylol acrylamide, or the like, and does not cause an increase in the viscosity even though blended with dithiocarbamate compound which is the marine anti-fouling agent. On the other hand, it is thought that when the water-based anti-fouling paint composition containing the metal cross-linked acrylic water-based emulsion composition of the present invention is applied to a base material to form a paint film, where stronger cross-linking bonds are created and the adhesion of the paint film to the base material is strengthened.

If the acrylic copolymer has low water solubility, the metal compound is preferably added as a fine powder or a water-based dispersion. If the metal compound is added as a very fine powder, the reaction will proceed more rapidly. If the metal compound is added as a water-based dispersion, the reaction will proceed even faster. Generally the content and efficiency of the reaction will not change based on the form of the metal compound, and only the reaction speed is affected. The pH of the acrylic water-based emulsion composition can be adjusted by adding a basic compound. However, the acrylic water-based emulsion composition is preferably kept acidic prior to adding the divalent metal compound.

The pH of the metal cross-linked acrylic water-based emulsion composition of the present invention is preferably in a range between 4 and 8. A basic compound such as ammonia or other amine compound can be used to adjust the pH of the metal cross-linked acrylic water-based emulsion composition or the acrylic water-based emulsion composition. Examples of other amine compounds include triethylamine, ethanolamine, and aminomethylpropanol, and the like.

If the pH of the metal cross-linked acrylic water-based emulsion composition is 7.0 or higher, a basic substance is preferably added after the acrylic copolymer in the acrylic water-based emulsion composition and the divalent metal compound have reacted. This is because if an amount of a basic substance which will increase the pH of the acrylic water-based emulsion composition to 7.0 or higher is added prior to reacting the acrylic copolymer and the divalent metal compound, the speed of the reaction between the acrylic copolymer and the divalent metal compound may be retarded. A metal cross-linked acrylic water-based emulsion composition to which a basic alkali metal salt has been added after the acrylic copolymer and the divalent metal compound have reacted is preferable as the metal cross-linked acrylic water-based emulsion composition of the present invention.

The water-based anti-fouling paint composition of the present invention contains a metal cross-linked acrylic water-based emulsion composition such that the resin solid content is in a range between 5% by weight and 30% by weight, preferably between 8% by weight and 25% by weight based on the total weight of the composition. The water-based anti-fouling paint composition of the present invention must contain the aforementioned metal cross-linked acrylic water-based emulsion composition as a paint film forming resin, and may also contain other copolymers, but polybutene is not used because it can reduce the anti-fouling effect and the self-polishing properties. Furthermore, the water-based anti-fouling paint composition of the present invention can provide the required performance desired of an anti-fouling paint even if the paint film forming resin includes only the metal cross-linked acrylic water-based emulsion composition. In other words, the water-based anti-fouling paint composition can be prepared without containing copolymers other than the copolymer included in the aforementioned metal cross-linked acrylic water-based emulsion compound as the paint film forming resin.

The marine anti-fouling agent used in the water-based anti-fouling paint composition of the present invention must contain dithiocarbamate compound as an essential component. Examples of dithiocarbamate compounds include bisdimethyldithiocarbamoyl-zinc ethylenebisdithiocarbamate, zinc dimethyldithiocarbamate, and manganese ethylenebisdithiocarbamate, and the like. The dithiocarbamate compound can be used individually or as a blend of two or more, and is used in a range between approximately 5% by weight and 30% by weight, preferably between 5% by weight and 15% by weight based on the total weight of the anti-fouling paint composition. Bisdimethyldithiocarbamoyl-zinc ethylenebisdithiocarbamate can be commercially procured for example as TOC-3204 Marine Anti-fouling Agent (product of Rohm and Haas).

Other marine anti-fouling agents which can be used with the present invention include copper anti-fouling agents such as copper powder, copper sulfite, copper rhodanide, and copper pyrithione, zinc anti-fouling agents such as zinc pyrithione, thiurum compounds such as tetramethylthiuram disulfide, tetraethylthiuram disulfide, isothiozoline anti-fouling agents such as 4, 5-dichloro-2-octyl-3-isothiozoline, and other commonly known the anti-fouling agents such as maleimide compounds, nitrile compounds, and di-tertiary-nonyl polysulfide, and the like. If other marine anti-fouling agents are included, the amount added is preferably in a range between 1% by weight and 100% by weight based on the weight of the dithiocarbamate compound.

If necessary, various additives for paint can be added to the water-based anti-fouling paint composition of the present invention, including colorants such as pigments and dyes, anionic, cationic, amphoteric, and nonionic surfactants, viscosity adjusting agents, and film forming agents. The water-based anti-fouling paint composition of the present invention preferably does not contain volatile organic solvents such as alcohol compounds, and the use of only water as a solvent is acceptable. Herein, solvents refers to a liquid for dissolving or dispersing the aforementioned components.

When the water-based anti-fouling paint composition of the present invention is applied to a fishing net as an embodiment of the present invention, a paint film can be formed on the fishing net by applying the composition of the present invention to the fishing net by a standard application method such as brushing or direct spraying, or the fishing net can be immersed in the composition of the present invention, and then dried by heating or dried at room temperature. Generally, the paint film is applied such that the thickness after drying will be between 3 gm and 30 µm, preferably between 5 µm and 10 µm.

### EMBODIMENTS

Embodiments of the present invention will be presented below, but the present invention is not restricted to these embodiments.

### Emulsion 1 (Comparison)

### Preparation of acrylic copolymer water-based emulsion

77 g of a 28% sodium lauryl sulfate solution was added and stirred into 2600 g of deionized water, and then the following monomers were gradually added to make an emulsified monomer blend.

| | |
|---|---|
| butyl acrylate (BA) | 3184 g |
| methyl methacrylate (MMA) | 3184 g |
| methacrylic acid (MAA) | 707 g |

A solution of 176 g of a 28% sodium lauryl sulfate solution and 5150 g of deionized water was placed in an appropriate reaction chamber equipped with a thermometer, condenser, and stirrer, and then heated up to between 80°C and 85°C. 164 g of the aforementioned emulsified monomer blend was added at once to the reaction chamber, and the temperature was adjusted to between 80°C and 82°C. A catalytic solution of 41.5 g of ammonium persulfate dissolved in 200 g of water was added at once. Within approximately 5 minutes after the start of polymerization, the temperature was increased from 3°C to 5°C, and the appearance of the reaction blend changed (color and clarity). When the generation of heat stopped, the remaining monomer blend and solvent solution (20.7g of ammonium persulfate dissolved in 600g of deionized water) were gradually added to the reaction chamber. The rate of addition was such that the heat from the polymerization reaction could be removed by cooling, and the reaction time was between two and three hours. The polymerization reaction temperature was maintained by cooling to be between 80°C and 84°C. When addition of the reactants was completed, the monomer blend and the catalyst, and the like, were rinsed with water in a container. The batch was cooled to atmospheric temperature for storage, or the appropriate temperature was maintained for reacting with the divalent metal compound. The copolymer obtained had a minimum film forming temperature of 22°C and a glass transition temperature of 17°C.

The method for measuring the minimum film forming temperature (MFT) was use of a parallel rectangular plate or table that has a minimum film forming bar with thermocouples for measuring temperature spaced at even intervals in the lengthwise direction. A temperature change from 0°C to 100°C was maintained along the bar by establishing heating means on the table and a container containing a solution of dry ice and acetone at the other end. A groove approximately 0.79 mm deep was formed in the longitudinal direction of the bar, across the entire temperature range. The minimum film forming temperature was the temperature of the bar at the point where a non-continuous film changed to a continuous film of the test sample.

### Emulsion 2

100 g of noncross-linked copolymer prepared in Emulsion 1 (Tg = 17°C , MFT = 22°C, solid component = 43.6%) was heated to 50°C, and a dispersion of 0.62 g of zinc oxide (7.60 mmol, theoretic stoichiometrical 30% of the acidic functional group of the copolymer) was added to the copolymer emulsion in five doses of 3 cc each. With each addition, the mixture becomes turbid, but the turbidity disappeared within five minutes. The pH of the emulsion composition obtained was adjusted to between 7.3 and 8.3 using ammonia, and then deionized water was added until the solid content was 38%. The emulsion composition did not have any precipitation, and the minimum film forming temperature was between 38°C and 40°C. The fact that the turbidity disappeared, that there was no precipitation, and that there was an increase in the minimum film forming temperature indicates that the copolymer and the zinc oxide had reacted to form metal cross-linked acrylic water-based emulsion composition.

### Emulsion 3

An emulsion composition was prepared similar to Emulsion 2, except that the reaction temperature was heated to 67°C. The turbidity due to the addition of zinc oxide disappeared more rapidly. This shows that the reaction speed was faster. The emulsion composition obtained did not have precipitation, and the minimum film forming temperature was between 40°C and 42°C. The fact that the turbidity disappeared, that the precipitation was eliminated, and that the minimum film forming temperature increased indicates that the copolymer and the zinc oxide had reacted to form a metal cross-linked acrylic water-soluble emulsion composition.

### Emulsion 4

An emulsion composition was prepared similar to Emulsion 2, except that the reaction temperature was 70°C, and the amount of zinc oxide was 0.83 g (10.14 mmol; theoretic stoichiometry 40%). The turbidity of the mixture due to the addition of the zinc oxide disappeared after approximately 1 minute. The emulsion composition obtained did not have precipitation, and the minimum film forming temperature was between 45°C and 48°C. The fact that the turbidity disappeared, that there was no precipitation, and that the minimum film forming temperature had increased all indicate that the copolymer and the zinc oxide had reacted, and that a metal cross-linked acrylic water-based emulsion composition had resulted.

### Emulsion 5 (Comparison)

1.69 g of zinc oxide fine powder (solid content 49.8%; 10.14 mmol; 40% of theoretical stoichiometry) was added to 100 g of the noncross-linked copolymer emulsion prepared in emulsion 1 (Tg = 17°C, MFT = 22°C, solid content 43.6%), and 15.24 g of water was added. The mixture was stirred for one hour at room temperature (22°C). However, the turbidity of the mixture did not disappear, and after allowing to sit, a large quantity of precipitation was formed. The filtered emulsion composition had a low film forming temperature of between 20°C and 24°C and the minimum film forming temperature did not change. The fact that the turbidity was not eliminated, that large quantities of precipitation were present, and that the minimum film forming temperature did not change all indicate that the zinc oxide did not react with the copolymer.

### Emulsion 6

An emulsion composition was prepared similar to Emulsion 2, except that the copolymer emulsion was maintained at 60°C, and 1.24 g of zinc oxide were added (15.21 mmol; theoretical stoichiometry 60%). The results were similar, and an emulsion composition was obtained, wherein the turbidity disappeared, no precipitation was present, and the MFT was between 54°C and 56°C. The fact that the turbidity disappeared, that a precipitate was not present, and that the minimum film forming temperature increased all indicate that the copolymer and the zinc oxide had reacted, and that a metal cross-linked alkali water-based emulsion composition was formed.

### Emulsion 7

An emulsion composition was prepared similar to Emulsion 6, except that 1.65 g of zinc oxide was added (20.28 mmol; theoretic stoichiometry 80%). The emulsion composition obtained did not have a precipitate, and had an MFT between 58°C and 60°C. The fact that there was no precipitate and that the minimum film forming composition increased both indicate that the copolymer and the zinc oxide had reacted, and that a metal cross-linked acrylic water-based emulsion composition was formed.

### Emulsion 8

An emulsion composition was prepared similar to Emulsion 6, except that 2.06 g of zinc oxide were used (25.35 mmol; theoretic stoichiometry 100%). The emulsion composition obtained had only a slight amount of precipitate, and the precipitate was mostly eliminated. The filtered emulsion composition had an MFT between 66°C and 69°C. The fact that the precipitate was mostly eliminated and that the minimum film forming temperature had increased both indicate that the copolymer and the zinc oxide had reacted to form of a metal cross-linked acrylic water-based emulsion composition.

### Preparation of the water-based anti-fouling paint composition

### Embodiment 1

10 g of bisdimethyldithiocarbamoyl-zinc ethylenebisdithiocarbamate (hereinafter referred to as "TOC") as a marine anti-fouling agent 10 was blended with 100 g of each of the following emulsion compositions (solid content 20%). The change in the viscosity was observed between when the marine anti-fouling agent was added to the emulsion composition and when the marine anti-fouling agent had not been added to the composition. The results are shown in Table 1. Note, the viscosity was measured for 1 minute at 60 ppm at room temperature (25°C) using a B-type viscometer No. 2 rotor.

**Table 1**

| Emulsion Composition | Emulsion Acid Value | Viscosity before adding mPa.s | Viscosity after adding mPa.s |
|---|---|---|---|
| Aforementioned Emulsion 6 | 65.0 | 30.0 | 15.5 |
| 51EA/45MMA/4MOA copolymer | 0.0 | 25.0 | 177.5 |
| 96EA/4MOA copolymer | 0.0 | 30.0 | 284.5 |

| | | | |
|---|---|---|---|
| *EA: Ethel acrylate *MMA: methyl methacrylate *MOA: N-methylol acrylamide | | | |

The metal cross-linked acrylic water-based emulsion composition of the present invention had a lower viscosity because of the addition of the marine anti-fouling agent, but when another emulsion composition was used, an increase in viscosity was observed. The two types of emulsion composition other than the metal cross-linked acrylic water-based emulsion composition of the present invention had high viscosity, and there was difficulty preparing an anti-fouling paint composition suitable for a fishing net.

### Water Resistant Test

### Embodiment 2

0.1 g of foam inhibitor derived from mineral oil was added to 53.8 g of water, and while mixing, 1 g of a dispersing agent (85% sodium salt of naphthalene sulfonate polymer) and 0.1 g of viscosity adjusting agent (xanthum gum) were gradually added. While mixing the completely dissolved solution, 45 grams of TOC powder was gradually added. After adding was complete, the mixing was continued for 10 minutes at 2000 rpm to obtain a TOC water-based dispersion.
52.7 g of the aforementioned Emulsion 6 (solid content 38%), 44.4 g of TOC water-based dispersion, and 5.0 g of film forming agent (trimethylpentanediol monoisobutyrate) were blended in 97.9 g of water. A polyethylene net was immersed in the aqueous solution obtained for sufficient time and then the net was dried. A 9.5% by weight paint film was formed based on the total weight of the treated polyethylene net. The treated polyethylene net was immersed for two weeks in a 5% sodium chloride aqueous solution, and the amount of paint film elution was measured by the change in weight of the polyethylene net. Approximately 9.3% by weight of the paint film eluted based on the total weight of the post-treated polyethylene net.

### Embodiment 3

A polyethylene net was immersed in 200 g of the aforementioned Emulsion 6 (solid content 38%) and after allowing to dry, a 9.3% by weight paint film was formed. 5.8% by weight of the paint film was eluted by the immersion test similar to Embodiment 2.

### Comparative Example 1

A process similar to Embodiment 2 was performed except that Emulsion 1 (solid content 38%) was used in place of the Emulsion 6. A 9.9% by weight paint film was formed based on the total weight of the polyethylene net immediately after treatment, and 4.2% by weight of the paint film was eluted by the immersion test.

### Comparative Example 2

26.0 g of the aforementioned Emulsion 6 (solid content 38%), 19.8 g of polybutene, 44.1 g of TOC water-based dispersion, and 2.0 g of film forming agent (trimethylpentanediol monoisobutyrate) were mixed in 108.2 g of water. A polyethylene net was immersed in the aqueous solution obtained for sufficient time, and then dried. A 10.1% by weight paint film was formed based on the total weight of the treated polyethylene net. The treated polyethylene net was immersed for two weeks in a 5% sodium chloride aqueous solution, and the amount of elution of the paint film was measured by the change in the weight of the polyethylene net. 3.3% by weight of the paint film eluted, based on the total weight of the polyethylene net immediately after treating.

Embodiment 2 and 3 of the present invention clearly have excellent self-polishing properties when compared to the aqueous solution composition of Comparative Examples 1 and 2.

### Embodiments 4 through 5 and Comparative Examples 3 through 9

Water-based anti-fouling paint compositions were prepared using the components shown in the following Table 2. The TOC water-based dispersion of Embodiment 2 (solid content 45%) was used as the marine anti-fouling agent, di-tertiary nonyl polysulfide was used as the marine anti-fouling agent 2, trimethylpentanediol monoisobutyrate was used as the film forming agent, and Primal (registered trademark) RM-12W (water-soluble urethane block polymer), produced by Rohm and Haas was used as the viscosity adjusting agent. Note, the values shown in Table 2 are in grams.

**Table 2**

| | Embodiment 4 | Embodiment 5 | Comparative Example 3 | Comparative Example 4 | Comparative Example 5 | Comparative Example 6 | Comparative Example 7 | Comparative Example 8 |
|---|---|---|---|---|---|---|---|---|
| Aforementioned Emulsion 1 | | | 88.00 | 88.82 | | 43.25 | | 132.09 |
| Aforementioned Emulsion 6 | 85.53 | 86.42 | | | 45.29 | | 131.55 | |
| Polybutene | | | | | 34.00 | 32.50 | | |
| Marine anti-fouling agent | 40.93 | 31.22 | 39.00 | 31.44 | 40.24 | 40.30 | | |
| Marine anti-fouling agent 2 | | 4.18 | | 4.18 | | | | |
| Film Forming Agent | 6.59 | 6.70 | 6.59 | 6.70 | 3.29 | 3.29 | 10.10 | 10.10 |
| Viscosity adjusting agent | 0.91 | 0.94 | 1.40 | 0.99 | 0.43 | 0.49 | 0.86 | 0.86 |
| Water | 72.60 | 72.66 | 72.60 | 72.66 | 84.00 | 84.00 | 63.20 | 63.20 |

A 30 cm x 30 cm polyethylene fishing net (30 mm diagonal mesh, 100 strand twisted) was immersed in each of the prepared water-based anti-fouling paint compositions, dried for one hour at room temperature (25°C), and then forced dried for one hour at 60°C. The treated fishing net was mounted on a suspension type test frame and immersed for two months at a depth of 2 m in Ishibashi Bay near Odawara City in Kanagawa Prefecture. The results for the physical properties and the adhesion of organisms for each of the paint compositions are shown in Table 3 and Table 4. Note, the results of a test frame which was not treated with the water-based anti-fouling paint is shown as Comparative Example 9.

**Table 3**

| | Embodiment | | Comparative Example | | | | | |
|---|---|---|---|---|---|---|---|---|
| | 4 | 5 | 3 | 4 | 5 | 6 | 7 | 8 |
| Solid content% | 25.1 | 25.7 | 25.2 | 25.9 | 25.5 | 25.2 | 24.7 | 24.8 |
| pH | 7.8 | 7.8 | 7.8 | 7.8 | 7.8 | 7.8 | 7.8 | 7.7 |
| Viscosity (mPa, S) | 15.0 | 11.0 | 15.0 | 15.5 | 15.0 | 17.5 | 32.5 | 37.5 |
| Dry Weight (g) | 4.3 | 4.1 | 4.8 | 4.5 | 4.4 | 4.9 | 4.9 | 6.0 |
| Paint with respect to treated fishing net % | 10.8 | 10.3 | 12 | 11.4 | 11.2 | 12.4 | 12.3 | 15.2 |

**Table 4 Results of Tests for Anti-fouling Effect**

| Timing | Adhesion species | Embodiment | | Comparative Example | | | | | | |
|---|---|---|---|---|---|---|---|---|---|---|
| | | 4 | 5 | 3 | 4 | 5 | 6 | 7 | 8 | 9 |
| First month | hydrozoans | 4 | 3 | 2.5 | 2 | 2.5 | 2.5 | 1 | 1 | 1 |
| | barnacles | | 5 | 5 | 5 | 5 | 5 | 5 | 5 | 5 |
| Second month | hydrozoans | 4 | 3 | 2.5 | 2 | 2.5 | 2.5 | 1 | 1 | 1 |
| | barnacles | 5 | 5 | 5 | 5 | 5 | 5 | 5 | 5 | 5 |

| | | | | | | | | | | |
|---|---|---|---|---|---|---|---|---|---|---|
| *5 = adhesion rate 0%; 4 = adhesion rate 10%; 3 = adhesion rate 30%, 2 = adhesion rate 60%, 1 = adhesion rate over 80% | | | | | | | | | | |

The water-based anti-fouling paint composition of the present invention had excellent adhesion without any increase in viscosity, and had excellent anti-fouling effects due to the self-polishing properties in seawater. Furthermore, the particularly superior anti-fouling effect was observed for hydrozoans in seawater.

## Claims

1. A water-based anti-fouling paint composition comprising a dithiocarbamate compound and a metal cross-linked acrylic water-based emulsion composition, and water wherein:
said water-based anti-fouling paint composition does not contain polybutene; and
said metal cross-linked acrylic water-based emulsion composition can be obtained by reacting
(i) a copolymer in an acrylic water-based emulsion composition produced by the emulsion polymerization of (a) an ethylenic unsaturated monomer or alkali metal salt thereof containing an acidic functional group accounting for between 3 and 90% by weight based on the total weight of monomer, and (b) an ethylenic unsaturated monomer not containing an acidic functional group accounting for between 10 and 97% by weight based on the total weight of monomer; and
(ii) a divalent metal compound;
said reaction performed at a temperature more than 10°C above the glass transition temperature of the copolymer and below the decomposition temperature of said copolymer.

2. The composition according to Claim 1, wherein the divalent metal is selected from copper, zinc, tin, magnesium, calcium, and manganese.

3. The composition according to Claim 2, wherein the divalent metal compound is a hydroxide, an oxide, a carbonate, or an acetate.

4. The composition according to Claim 1, wherein said acrylic water-based emulsion composition is prepared by emulsification polymerization of (a) an ethylenic unsaturated monomer or alkali metal salt thereof containing only carboxyl groups as acidic functional groups and accounting for between 3 and 90% by weight of the total weight of monomer, and (b) ethylenic unsaturated monomer not containing an acidic functional group and accounting for between 10 and 97% by weight of the total weight of monomer, said water-based anti-fouling paint composition not containing an organic solvent.

5. A water-based anti-fouling paint composition consisting of: an anti-fouling agent containing a dithiocarbamate compound; metal cross-linked acrylic water-based emulsion composition, surfactant; viscosity adjusting agent; film forming agent; colorant; and water; wherein said water-based anti-fouling paint composition does not contain polybutene; and said metal cross-linked acrylic water-based emulsion composition can be obtained by reacting
(i) a copolymer in an acrylic water-based emulsion composition produced by the emulsion polymerization of (a) an ethylenic unsaturated monomer or alkali metal salt thereof containing an acidic functional group accounting for between 3 and 90% by weight based on the total weight of monomer, and (b) an ethylenic unsaturated monomer not containing an acidic functional group accounting for between 10 and 97% by weight based on the total weight of monomer; and
(ii) a divalent metal compound;
said reaction performed at a temperature more than 10°C above the glass transition temperature of the copolymer and below the decomposition temperature of said copolymer.

6. The composition according to Claim 5, wherein the divalent metal is selected from copper, zinc, tin, magnesium, calcium, and manganese.

7. The water-based anti-fouling paint composition according to Claims 1 or 5, not containing a polymer other than the polymer contained in the metal cross-linked acrylic water-based emulsion composition.

8. The water-based anti-fouling paint composition according to Claims 1 or 5, wherein the dithiocarbamate compound is bisdimethyldithiocarbamoyl-zinc ethylenebisdithiocarbamate.
